# FASCICULE DE BREVET EUROPEEN

(11) **EP 3 519 787 B1**
(45) Date de publication et mention de la délivrance du brevet: **17.02.2021**
(21) Numéro de dépôt: 17780845.8
(22) Date de dépôt: 26.09.2017
(51) Int. Cl.: G01K 7/18, G01K 15/00, G01K 7/22

(54) **PROCEDE D'ETALONNAGE D'UNE SONDE DE TEMPERATURE**
VERFAHREN ZUR KALIBRIERUNG EINER TEMPERATURSONDE
METHOD FOR CALIBRATING A TEMPERATURE PROBE

(30) Priorité: 27.09.2016 FR 1659068
(43) Date de publication de la demande: 07.08.2019
(73) Titulaire: ArianeGroup SAS, 75015 Paris (FR)
(72) Inventeur: AMEYE, Bertrand, 27110 Le Neubourg (FR); FAMMERY, Simon, 27190 La Bonneville sur Iton (FR)
(74) Mandataire: Cabinet Beau de Loménie
(86) Numéro de dépôt international: PCT/FR2017/052588
(87) Numéro de publication internationale: WO 2018/060587

(56) Documents cités:
- WO-A1-2012/127080
- FR-A1- 2 590 981
- GB-A- 2 435 691
- JP-A- 2007 248 277
- Alexander Von Beckerath ET AL: "WIKA Handbook. Pressure & Temperature Measurement", , 31 décembre 2008 (2008-12-31), pages 268-272, XP055374852, Extrait de l'Internet: URL:http://www.wika.us/upload/BR_RF_Handbo ok_en_us_18447.pdf [extrait le 2017-05-22]

## Description

### DOMAINE DE L'INVENTION

Le présent exposé concerne un procédé d'étalonnage d'une sonde de température. Un tel procédé peut être utilisé pour étalonner une sonde de température par rapport à une sonde de référence, en particulier pour des mesures de températures cryogéniques.

### ARRIÈRE-PLAN TECHNOLOGIQUE

Les appareils de mesure fonctionnent généralement sur la base de la correspondance entre deux grandeurs physiques dont l'une est la grandeur que l'on souhaite mesurer et l'autre est la grandeur effectivement mesurée d'un point de vue physique. Par exemple, les sondes de température peuvent être du type comprenant un fil de platine dont la résistance électrique varie en fonction de la température. Ainsi, on détermine la température du fil de platine en mesurant la résistance du fil de platine, par correspondance entre la résistance et la température.

L'opération d'étalonnage permet de définir, avec la précision recherchée, la correspondance entre ces deux grandeurs. Dans le cas des sondes de température, cette correspondance peut être obtenue par comparaison entre la sonde de température à étalonner et une sonde de température de référence, en associant la résistance électrique (ou plus généralement toute autre grandeur pertinente) mesurée par la sonde de température à étalonner et la température mesurée par la sonde de température de référence. De cette façon, la sonde est étalonnée par rapport à la sonde de référence. Quelques exemples de procédés d'étalonnage se basant sur ce principe peuvent être trouvés dans les documents suivants : WO 2012/127080 A1, GB 2435691 A, JP 2007248277 A, Alexander Von Beckerath et al : « WIKA Handbook. Pressure & Temperature Measurement », 31 décembre 2008, pages 267-272, ainsi que FR 2590981 A1.

Avec une telle méthode d'étalonnage, on constate expérimentalement que de faibles variations sur les conditions opératoires d'étalonnage, telles que le type de sonde à étalonner, sa géométrie, sa position par rapport à la sonde de référence, ont un impact significatif sur les mesures de résistance. Dans ces conditions, la correspondance déterminée est donc peu précise.

Il existe donc un besoin pour un nouveau procédé d'étalonnage d'une ou plusieurs sondes de température, qui améliore la précision d'étalonnage des sondes de température.

### PRÉSENTATION DE L'INVENTION

A cet effet, le présent exposé concerne un procédé d'étalonnage d'au moins une sonde de température par rapport à une sonde de température de référence à une température souhaitée, comprenant les étapes suivantes :
- placer l'au moins une sonde de température et la sonde de température de référence dans un récipient ;
- immerger des éléments sensibles respectifs de l'au moins une sonde de température et de la sonde de température de référence dans un fluide ayant une température de solidification supérieure à la température souhaitée ;
- refroidir le fluide jusqu'à la température souhaitée, ce par quoi le fluide est solidifié ;
- réaliser un point d'étalonnage à la température souhaitée par comparaison de l'au moins une sonde de température à la sonde de température de référence.

La température souhaitée est la température à laquelle on souhaite étalonner la sonde de température.

Le récipient peut être thermiquement isolé. Dans certains modes de réalisation, le récipient peut notamment être configuré pour conserver une température stable, par exemple grâce à un système de régulation de température. Un tel récipient est parfois appelé thermostat ou, dans le cas de températures cryogéniques, cryostat.

Un élément sensible est un élément de la sonde dont une caractéristique physique est liée à la température et est mesurée pour en déduire, par mise en correspondance et/ou par calcul, la température. Par exemple, les sondes de température présentées en introduction peuvent comprendre un élément sensible renfermant un fil de platine et configuré de sorte que la température du fil de platine est sensiblement égale à celle de l'élément sensible.

La température de solidification du fluide peut être mesurée à la pression ambiante ou à un point caractéristique tel que le point triple du fluide. Le point triple, typiquement d'un corps pur, désigne des conditions de température et de pression dans lesquelles le corps existe à la fois à l'état solide, liquide et gazeux.

Dans le présent exposé, immerger signifie que l'élément sensible est plongé dans le fluide, que ce dernier soit liquide ou gazeux. On comprend qu'il y a assez de fluide dans le récipient pour que les éléments sensibles respectifs de la sonde de température et de la sonde de température de référence soient immergés également lorsque le fluide passe à l'état solide, malgré la variation de densité.

Réaliser un point d'étalonnage peut comprendre, par exemple, la mesure d'une valeur de température fournie par la sonde de température de référence, la mesure d'une valeur de la caractéristique physique précitée de la sonde de température à étalonner, typiquement la résistance, et la mise en correspondance de ces deux valeurs. La validité de la mise en correspondance repose sur l'hypothèse que la sonde de température et la sonde de température de référence sont à la même température lorsqu'on réalise le point d'étalonnage.

Dans le procédé proposé, comme la température souhaitée est strictement inférieure à la température de solidification du fluide, le fluide est entièrement solidifié lorsqu'on réalise le point d'étalonnage à la température souhaitée. Les éléments sensibles respectifs de la sonde de température à étalonner et de la sonde de température de référence étant immergés, le matériau solide (fluide solidifié) les encapsule. Par suite, les transferts thermiques au sein du récipient sont essentiellement des transferts thermiques par conduction avec les parois du récipient, via le fluide solidifié. Les échanges thermiques par convection et rayonnement sont fortement limités, ce qui garantit un faible gradient thermique entre les parois du récipient, la sonde de température de référence et la sonde de température à étalonner. L'inertie thermique du fluide solidifié permet en outre de stabiliser la température desdites sondes plus facilement qu'avec un bain liquide, en particulier lorsque le récipient est thermiquement régulé. Ainsi, le procédé proposé permet de s'assurer, plus efficacement qu'avec les procédés connus, que la sonde de température et la sonde de température de référence sont à des températures aussi proches que possibles, idéalement la même température avec une incertitude inférieure à la précision souhaitée. L'étalonnage réalisé est donc très précis.

Dans certains modes de réalisation, l'au moins une sonde de température comprend un corps creux entourant l'élément sensible, le corps creux ayant au moins un orifice de sorte que lorsque l'élément sensible de l'au moins une sonde est immergé dans le fluide, le fluide soit en contact avec l'élément sensible à travers ledit orifice.

Une telle sonde de température est particulièrement difficile à étalonner, du fait de sa géométrie, de la présence du corps creux qui protège physiquement l'élément sensible mais qui constitue également une protection thermique indésirable de l'élément sensible. Grâce au procédé présenté ci-dessus, le fluide peut s'infiltrer à travers ledit orifice et, lors de la solidification du fluide, le fluide est solidifié dans l'orifice. Ainsi, du fluide solidifié est au contact de l'élément sensible à travers l'orifice lorsque l'on réalise le point d'étalonnage. Cela permet de minimiser encore le gradient thermique entre l'élément sensible et le récipient, et ce indépendamment de la géométrie de la sonde de température et du corps creux.

Dans certains modes de réalisation, la sonde de température de référence comprend un corps creux entourant l'élément sensible, le corps creux ayant au moins un orifice de sorte que lorsque l'élément sensible de la sonde est immergé dans le fluide, le fluide soit en contact avec l'élément sensible à travers ledit orifice. Grâce à cela, comme expliqué précédemment, le fluide solidifié est au contact de l'élément sensible à travers l'orifice lorsque l'on réalise le point d'étalonnage. Cela améliore la précision de la mesure de température par la sonde de température de référence.

Dans certains modes de réalisation, les éléments sensibles sont placés sensiblement équidistants des parois du récipient. Cela permet de diminuer encore davantage la différence de température entre la sonde de température à étalonner et la sonde de température de référence.

Dans certains modes de réalisation, les éléments sensibles sont placés dans une partie inférieure du récipient. Cela permet de minimiser la quantité de fluide à utiliser pour la mise en œuvre du procédé.

Dans certains modes de réalisation, le procédé comprend en outre la réalisation d'un point d'étalonnage lors de la solidification du fluide. Les plages de température de solidification d'un fluide étant connu, la réalisation d'un point d'étalonnage lors de la solidification du fluide permet de confirmer la température donnée par la sonde de température de référence.

Dans certains modes de réalisation, le fluide est un corps pur ou un eutectique. On rappelle qu'un corps pur est un corps ne comportant qu'une seule espèce chimique, à la différence d'un mélange qui en comporte plusieurs. Un corps pur a pour propriété que ses changements d'états (fusion, solidification, vaporisation ou liquéfaction) se produisent à température constante. Un eutectique est un mélange dont au moins un changement d'état se produit à température constante. Ainsi, un eutectique se comporte comme un corps pur vis-à-vis du changement d'état considéré.

Dans ces modes de réalisation, au moins un changement d'état du fluide, de préférence la solidification ou la fusion, a lieu à température constante. Ainsi, lorsque le fluide coexiste sous deux ou plusieurs états physiques, la température est connue avec une très grande précision. Il est donc particulièrement avantageux de réaliser un point d'étalonnage lors d'un changement d'état d'un corps pur ou d'un eutectique, typiquement lors de la solidification ou de la fusion, pour lequel on observe un palier de température, c'est-à-dire une température constante, stable et généralement bien documentée.

Dans certains modes de réalisation, le procédé comprend la réalisation d'un point d'étalonnage au point triple du fluide. L'observation d'un point triple est une indication de température très précise dont l'incertitude est inférieure à 10⁻³°C.

Dans certains modes de réalisation, le procédé comprend la réalisation de plusieurs points d'étalonnage autour de la température souhaitée. Par exemple, le procédé peut comprendre la réalisation d'au moins un point d'étalonnage de part et d'autre de la température souhaitée. Ainsi, la sonde est étalonnée non seulement à la température souhaitée mais aussi autour de la température souhaitée, par exemple à des températures proches, par exemple des températures du même ordre de grandeur, ce qui la rend adaptée pour réaliser des mesures précises dans une gamme de températures autour de la température souhaitée. De préférence, les températures des autres points d'étalonnage sont inférieures à la température de solidification du fluide.

Dans certains modes de réalisation, des connecteurs électriques respectifs de l'au moins une sonde de température et/ou de la sonde de température de référence sont au moins partiellement immergés dans le fluide. Cette condition est de préférence encore réalisée lorsque le fluide est solidifié. Ainsi, le fluide solidifié autour des connecteurs coupe toute conduction thermique par les connecteurs, ce qui diminue encore le gradient de température au sein même de la sonde de température et de la sonde de température de référence.

Dans certains modes de réalisation, la température souhaitée est une température cryogénique et le récipient est un cryostat.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente schématiquement, en coupe, une sonde de température selon un mode de réalisation ;
- la figure 2 est vue une schématique en coupe d'une première étape d'un procédé selon un mode de réalisation ;
- la figure 3 est vue une schématique en coupe d'une deuxième étape d'un procédé selon un mode de réalisation ;
- la figure 4 est vue une schématique en coupe d'une troisième étape d'un procédé selon un mode de réalisation ;
- la figure 5 est vue une schématique en coupe d'une quatrième étape d'un procédé selon un mode de réalisation ;
- la figure 6 est vue une schématique en coupe selon le plan VI-VI de la figure 5 ;
- la figure 7 est un détail de la figure 6.

### DESCRIPTION DÉTAILLÉE DE L'INVENTION

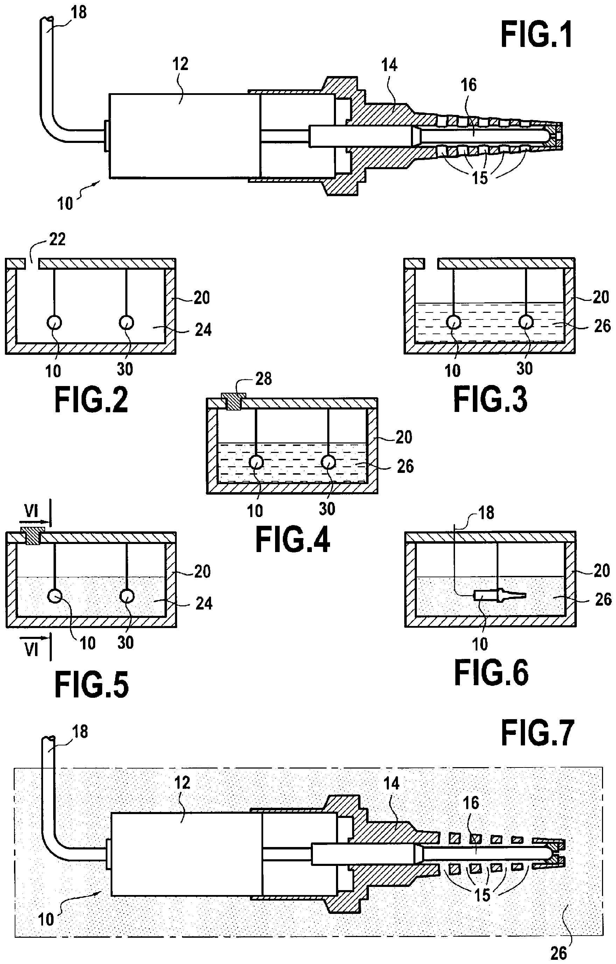

Le procédé d'étalonnage décrit dans le présent exposé peut être appliqué à tout type de sonde de température, par exemple à une sonde de température telle que celle représentée à la figure 1.

La figure 1 représente schématiquement, en coupe, une sonde de température 10 de type industriel, par exemple adaptée à mesurer des températures cryogéniques. La sonde 10 comprend un corps principal 12. Comme indiqué précédemment, la sonde 10 comprend un corps creux 14 entourant un élément sensible 16. Le corps creux 14 est monté sur le corps principal 12. L'élément sensible 16 est situé à l'intérieur du corps creux 14. Le corps creux 14 présente au moins un orifice 15, en l'occurrence une pluralité d'orifices 15 répartis sur le corps creux, ici distribués axialement et circonférientiellement. Le ou les orifices 15 sont configurés pour mettre l'élément sensible 16 en communication fluidique avec l'extérieur de la sonde 10.

La sonde de température 10 comprend enfin un connecteur 18. Le connecteur 18 est un connecteur électrique permettant l'échange d'informations entre l'élément sensible 16 et l'extérieur de la sonde 10.

Typiquement, l'élément sensible 16 renferme un fil de platine dont la résistance électrique est fonction de la température. La résistance du fil de platine peut être mesurée à distance par l'intermédiaire du connecteur 18. Ce type de sonde, parfois appelée sonde à résistance de platine, est connu en soi.

Les figures 2 à 6 illustrent schématiquement les étapes, de préférence successives, d'un procédé d'étalonnage de la sonde de température 10 selon un mode de réalisation de l'invention.

Comme on peut le voir sur la figure 2, on fournit une sonde de température 10, un récipient 20 et une sonde de référence 30. Le récipient 20 est de préférence un récipient thermiquement isolé, voire comportant un système de régulation thermique configuré pour réchauffer, refroidir et/ou maintenir les parois dudit récipient à une température choisie. Dans le présent mode de réalisation, le récipient 20 est configuré pour supporter des températures cryogéniques, c'est-à-dire inférieures à 120 K (c'est-à-dire environ -150°C). Le récipient 20 est ici un cryostat. Le récipient 20 est de volume constant. Par ailleurs, le récipient 20 est muni d'un système de régulation de la température de ses parois par compression-détente d'un fluide. Un tel système de régulation est en soi connu de l'homme du métier. En outre, lors de la chute de température, à volume constant lorsque le récipient 20 est fermé, la pression à l'intérieur dudit récipient 20 chute également.

La sonde de température de référence 30 est une sonde de température dont on connaît la correspondance entre la grandeur physique mesurée, par exemple la résistance d'un fil de platine, et la température. La sonde de référence 30 peut être similaire à la sonde de température 10. La sonde de température de référence 30 peut aussi être d'un autre type, d'une autre structure, et/ou fonctionner sur la base d'une correspondance physique différente. La sonde de température de référence 30 peut être une sonde de température précédemment étalonnée et/ou une sonde de température dont les caractéristiques, typiquement sa géométrie, la rendent compatible avec l'étalonnage par un laboratoire agréé.

Le procédé vise à étalonner la sonde de température 10 par rapport à la sonde de température de référence 30. La sonde de température 10 et la sonde de température de référence 30 sont placées dans l'enceinte 24 d'un récipient 20 comportant une ouverture 22. Selon l'exemple illustré sur la figure 2, chaque sonde 10, 30 est positionnée sur un support suspendu à un couvercle du récipient 20. Les sondes de températures 10, 30 peuvent également être fixées sur un support commun ou par tout autre moyen de fixation convenant. Le support peut être réalisé par l'homme du métier selon ses connaissances, compte tenu des critères mis en évidence par les inventeurs et détaillés par la suite.

De préférence, les éléments sensibles 16 respectifs des sondes de température 10, 30 sont placés sensiblement équidistants des parois du récipient 20.

De plus, le support des sondes de température 10, 30 peut être configuré de sorte que les éléments sensibles 16 respectifs sont placés dans une partie inférieure du récipient 20. Comme on le verra en référence à la figure 3, il est alors suffisant de remplir de fluide une partie inférieure du récipient pour immerger lesdits éléments sensibles 16.

De préférence, les sondes de température 10, 30 s'étendent sensiblement horizontalement dans le récipient 20 (voir figure 6). Ceci permet à la fois d'assurer la condition d'équidistance mentionnée ci-dessus vis-à-vis de la paroi inférieure du récipient et de limiter la quantité de fluide nécessaire pour immerger les éléments sensibles.

Avant ou après avoir placé la sonde de température 10 et la sonde de température de référence 30 dans le récipient 10, on verse un fluide dans le récipient 20. Comme indiqué précédemment, le fluide est un liquide ou un gaz à pression atmosphérique et température ambiante. En outre, le fluide est de préférence un corps pur ou un eutectique.

En l'occurrence, on souhaite réaliser l'étalonnage de la sonde de la température à 20 K. En d'autres termes, dans cet exemple, la température souhaitée est de 20 K. On choisit donc un fluide qui a une température de solidification supérieure à 20 K, ici le néon dont le point triple est à 24,556 K et 0,433 bar absolus. Toutefois, il est possible de choisir un autre fluide en fonction de la température souhaitée, tant que la température de solidification de ce fluide est supérieure à la température souhaitée. Par exemple, pour une température souhaitée de l'ordre de 90 K, il est possible d'utiliser comme fluide du krypton dont le point triple est à 115 K.

S'il était gazeux à température ambiante et pression atmosphérique, le fluide est ensuite liquéfié. Si le fluide était déjà liquide, sa liquéfaction n'est pas nécessaire.

A l'issue de l'étape de placement et du versement de fluide, les éléments sensibles 16 respectifs de la sonde de température et de la sonde de température de référence sont immergés dans le fluide 26, comme on peut le voir sur la figure 3. Les éléments sensibles respectifs peuvent être complètement plongés dans le fluide 26.

A ce stade, il est possible de réaliser un premier point d'étalonnage, par exemple en relevant la température indiquée par la sonde de référence 30 et la résistance électrique renvoyée par la sonde à étalonner 10. Le premier point d'étalonnage peut être effectué à la température d'ébullition du fluide à la pression atmosphérique. Pour le néon, cette température est de 27,1K à 1,013 bar absolu.

Après avoir immergé les éléments sensibles des sondes 10, 30 dans le fluide 26, on ferme le récipient 20, en l'occurrence grâce à un élément de fermeture 28. L'enceinte 24 du récipient 20 est alors de volume constant fermé, tandis que la pression et la température du fluide 26 sont liées par des équations monophasiques ou d'équilibre multiphasiques.

On refroidit ensuite le fluide, par exemple grâce au système de régulation thermique du récipient 20. La pression chute également dans l'enceinte 24. A ce stade, il peut être nécessaire d'injecter davantage de fluide dans le récipient 20. En effet, la liquéfaction et la solidification du fluide peuvent diminuer sensiblement son volume, si bien que la sonde de température 10 et la sonde de température de référence 30 pourraient ne plus être immergées. C'est par exemple le cas avec le néon, pour lequel il faut injecter environ 1400 litres de néon gazeux pour obtenir, au point triple, environ un litre de néon liquide et solide. Le fluide supplémentaire peut être injecté à température ambiante, ce qui peut faire remonter la température dans le récipient si cela n'est pas entièrement compensé par le système de refroidissement. Après l'éventuelle injection, la température est régulée pour atteindre le point triple du fluide. En l'occurrence, lorsque le néon est à son point triple, il est sur un palier de température très stable. On observe l'atteinte du point triple lorsque les trois phases du néon coexistent. La température n'est alors plus surveillée, l'apport de froid fourni par le système de régulation de température étant consommé pour démarrer la solidification du néon. La variation de température observée est très faible, classiquement inférieure à 0,3 mK. Au point triple, le néon coexiste sous les trois phases solide, liquide et gazeuse (voir figure 4).

On réalise alors un point d'étalonnage au point triple du fluide. La température étant connue de manière très précise. En outre, la réalisation d'un point d'étalonnage en un point connu tel que le point triple du fluide 26 permet de vérifier l'étalonnage de la sonde de référence 30.

Lorsque le fluide est entièrement solidifié (figure 5), la baisse de température du fluide solidifié 26 reprend. La température des parois du récipient 20 est alors régulée pour atteindre la température souhaitée, dans cet exemple 20 K. Lorsque la sonde de température de référence 30 indique que l'on se trouve à la température souhaitée, on réalise un point d'étalonnage pour la sonde de température à étalonner 10.

On peut réaliser d'autres points d'étalonnage à d'autres températures souhaitées, supérieures, inférieures ou égales à la température de solidification du fluide 26. Par exemple, on peut réaliser plusieurs points d'étalonnage autour de la température souhaitée, de façon à étalonner précisément la sonde sur un intervalle de températures comprenant la température souhaitée. Une telle pluralité de points d'étalonnage est particulièrement utile lorsque la variation de la résistance de la sonde de température varie de manière non-linéaire en fonction de la température.

Les figures 6 et 7 montrent la sonde de température 10 immergée et emprisonnée dans le fluide solidifié 26. Le détail illustré sur la figure 7 montre que le fluide 26, à l'état liquide, a pénétré par les orifices 15 du corps creux 14 de la sonde de température 10. Ainsi, le fluide 26 est en contact avec l'élément sensible 16 à travers les orifices 15. Ce contact est préservé lors de la solidification du fluide 26. Ce contact direct entre l'élément sensible 16 et le fluide solidifié 26 servant de conducteur thermique avec la sonde de référence 30 et les parois du récipient 20 permet de limiter l'influence de la géométrie et de la structure de la sonde 10 sur l'étalonnage et d'améliorer la précision de l'étalonnage.

En outre, comme on peut le voir sur les figures 6 et 7, les connecteurs électriques 18 respectifs de la sonde de température 10 et/ou de la sonde de température de référence 30 sont au moins partiellement immergés dans le fluide 26, au moins après solidification. Ainsi, la conduction thermique au sein des connecteurs 18 est coupée, ce qui contribue à maintenir la sonde de température 10 et la sonde de température de référence 30 à la même température.

En mettant en œuvre le procédé décrit ci-dessus, les inventeurs ont mesuré expérimentalement, pour la sonde de température présentée en figure 1, une incertitude inférieure à ± 0,05 K à 3σ, tandis que les procédés connus ne permettaient que d'obtenir une incertitude supérieure.

Le procédé d'étalonnage peut être mis en œuvre avec une ou plusieurs sondes de températures à étalonner, de manière simultanée, en choisissant un fluide ayant une température de solidification supérieure à la température d'étalonnage souhaitée la plus haute.

## Revendications

1. Procédé d'étalonnage d'au moins une sonde de température (10) par rapport à une sonde de température de référence (30) à une température souhaitée, comprenant les étapes suivantes :
- placer l'au moins une sonde de température (10) et la sonde de température de référence (30) dans un récipient (20) ;
- immerger des éléments sensibles (16) respectifs de l'au moins une sonde de température (10) et de la sonde de température de référence (30) dans un fluide (26) ayant une température de solidification supérieure à la température souhaitée ;
- refroidir le fluide (26) jusqu'à la température souhaitée, ce par quoi le fluide (26) est solidifié ;
- réaliser un point d'étalonnage à la température souhaitée par comparaison de l'au moins une sonde de température (10) à la sonde de température de référence (30).

2. Procédé d'étalonnage selon la revendication 1, dans lequel l'au moins une sonde de température (10) comprend un corps creux (14) entourant l'élément sensible (16), le corps creux (14) ayant au moins un orifice (15) de sorte que lorsque l'élément sensible (16) de l'au moins une sonde (10) est immergé dans le fluide (26), le fluide (26) soit en contact avec l'élément sensible (16) à travers ledit orifice (15).

3. Procédé d'étalonnage selon la revendication 1 ou 2, dans lequel les éléments sensibles (16) sont placés sensiblement équidistants des parois du récipient (20).

4. Procédé d'étalonnage selon l'une quelconque des revendications 1 à 3, dans lequel les éléments sensibles (16) sont placés dans une partie inférieure du récipient (20).

5. Procédé selon l'une quelconque des revendications 1 à 4, comprenant la réalisation d'un point d'étalonnage lors de la solidification du fluide (26).

6. Procédé selon l'une quelconque des revendications 1 à 5, dans lequel le fluide (26) est un corps pur ou un eutectique.

7. Procédé selon la revendication 6, comprenant la réalisation d'un point d'étalonnage au point triple du fluide (26).

8. Procédé selon l'une quelconque des revendications 1 à 7, comprenant la réalisation de plusieurs points d'étalonnage autour de la température souhaitée.

9. Procédé selon l'une quelconque des revendications 1 à 8, dans lequel des connecteurs électriques (18) respectifs de l'au moins une sonde de température (10) et/ou de la sonde de température de référence (30) sont au moins partiellement immergés dans le fluide (26).

10. Procédé selon l'une quelconque des revendications 1 à 9, dans lequel la température souhaitée est une température cryogénique et le récipient (20) est un cryostat.

## Patentansprüche

1. Verfahren zum Kalibrieren von wenigstens einer Temperatursonde (10) in Bezug auf eine Referenztemperatursonde (30) bei einer gewünschten Temperatur, umfassend die folgenden Schritte:
- Anordnen der wenigstens einen Temperatursonde (10) und der Referenztemperatursonde (30) in einem Behälter (20),
- Eintauchen von jeweiligen empfindlichen Elementen (16) der wenigstens einen Temperatursonde (10) und der Referenztemperatursonde (30) in ein Fluid (26), das eine Erstarrungstemperatur oberhalb der gewünschten Temperatur aufweist,
- Abkühlen des Fluids (26) bis auf die gewünschte Temperatur, wodurch das Fluid (26) verfestigt wird,
- Herstellen eines Kalibrierungspunktes bei der gewünschten Temperatur durch Vergleichen der wenigstens einen Temperatursonde (10) mit der Referenztemperatursonde (30).

2. Kalibrierungsverfahren nach Anspruch 1, bei dem die wenigstens eine Temperatursonde (10) einen Hohlkörper (14) umfasst, der das empfindliche Element (16) umgibt, wobei der Hohlkörper (14) wenigstens eine Öffnung (15) aufweist, so dass dann, wenn das empfindliche Element (16) der wenigstens einen Sonde (10) in das Fluid (26) eingetaucht ist, das Fluid (26) durch die Öffnung (15) hindurch mit dem empfindlichen Element (16) in Kontakt ist.

3. Kalibrierungsverfahren nach Anspruch 1 oder 2, bei dem die empfindlichen Elemente (16) von den Wänden des Behälters (20) im Wesentlichen gleich weit beabstandet sind.

4. Kalibrierungsverfahren nach einem der Ansprüche 1 bis 3, bei dem die empfindlichen Elemente (16) in einem unteren Teil des Behälters (20) angeordnet sind.

5. Verfahren nach einem der Ansprüche 1 bis 4, umfassend das Herstellen eines Kalibrierungspunktes während des Erstarrens des Fluids (26).

6. Verfahren nach einem der Ansprüche 1 bis 5, bei dem das Fluid (26) ein Reinstoff oder ein Eutektikum ist.

7. Verfahren nach Anspruch 6, umfassend das Herstellen eines Kalibrierungspunktes am Tripelpunkt des Fluids (26).

8. Verfahren nach einem der Ansprüche 1 bis 7, umfassend das Herstellen von mehreren Kalibrierungspunkten um die gewünschte Temperatur herum.

9. Verfahren nach einem der Ansprüche 1 bis 8, bei dem die jeweiligen elektrischen Verbinder (18) der wenigstens einen Temperatursonde (10) und/oder der Referenztemperatursonde (30) wenigstens teilweise in das Fluid (26) eingetaucht sind.

10. Verfahren nach einem der Ansprüche 1 bis 9, bei dem die gewünschte Temperatur eine kryogene Temperatur ist und der Behälter (20) ein Kryostat ist.

## Claims

1. A method for calibrating at least one temperature probe (10) with respect to a reference temperature probe (30) at a desired temperature, comprising the following steps:
- placing the at least one temperature probe (10) and the reference temperature probe (30) in a container (20);
- immersing respective sensing elements (16) of the at least one temperature probe (10) and of the reference temperature probe (30) in a fluid (26) having a solidification temperature greater than the desired temperature;
- cooling the fluid (26) down to the desired temperature, whereby the fluid (26) is solidified;
- achieving a calibration point at the desired temperature by comparing the at least one temperature probe (10) with the reference temperature probe (30).

2. The calibration method according to claim 1, wherein the at least one temperature probe (10) comprises a hollow body (14) surrounding the sensing element (16), the hollow body (14) having at least one orifice (15) so that when the sensing element (16) of the at least one probe (10) is immersed in the fluid (26), the fluid (26) is in contact with the sensing element (16) through said orifice (15).

3. The calibration method according to claim 1 or 2, wherein the sensing elements (16) are placed substantially equidistant from the walls of the container (20).

4. The calibration method according to any one of claims 1 to 3, wherein the sensing elements (16) are placed in a lower part of the container (20).

5. The calibration method according to any one of claims 1 to 4, comprising achieving a calibration point upon solidification of the fluid (26).

6. The calibration method according to any one of claims 1 to 5, wherein the fluid (26) is a pure substance or a eutectic.

7. The calibration method of claim 6, comprising achieving a calibration point at the triple point of the fluid (26).

8. The calibration method according to any one of claims 1 to 7, comprising achieving several calibration points around the desired temperature.

9. The calibration method according to any one of claims 1 to 8, wherein respective electrical connectors (18) of the at least one temperature probe (10) and/or of the reference temperature probe (30) are at least partially immersed in the fluid (26).

10. The calibration method according to any one of claims 1 to 9, wherein the desired temperature is a cryogenic temperature and the container (20) is a cryostat.
